# EUROPEAN PATENT APPLICATION

(11) **EP 1 954 082 A1**
(43) Date of publication of application: **06.08.2008**
(21) Application number: 06805031.9
(22) Date of filing: 23.10.2006
(51) Int. Cl.: H04Q 7/38

(54) **METHOD AND DEVICE FOR PARALLEL INTERFERENCE CANCELLATION BASED ON CONTROL CHANNEL**

(30) Priority: 11.11.2005 CN 200510115916
(71) Applicant: Huawei Technologies Co., Ltd., Longgang District, Shenzhen Guangdong 518129 (CN)
(72) Inventor: LI, Huajia, Shenzhen, Guangdon 518129 (CN); WANG, Shaobo, Shenzhen, Guangdon 518129 (CN)
(74) Representative: Körber, Martin Hans
(86) International application number: PCT/CN2006/002823
(87) International publication number: WO 2007/054010

(57) **Abstract**

A method and device for performing parallel interference cancellation based on control channel are described. In the present invention, received signals in a dedicated physical control channel (DPCCH) of each subscriber are despread, combined and decided by a base station so as to obtain demodulation decision information. The received signals in DPCCH of each subscriber are reconstructed according to received pilot symbols information in a DPCCH of each subscriber and the obtained demodulation decision information, and a parallel interference cancellation processing is performed on received subscriber base band data based on the reconstructed signals. The present invention only requires one demodulation processing, thus realization becomes easier and less resource is consumed. The received signals in the subscriber DPCCH realization are reconstructed based on a transmit power control (TPC) signal of a time slot level, so the base band data storage and the time delay of waiting for the service channel demodulation processing may be reduced. Furthermore, in the present invention, part of interference of the subscriber DPCCH is cancelled, and a receive signal-to-noise ratio (SNR) of the service channel is improved, so the capacity and the coverage performance of the whole self-interference system are improved.

## Description

### FIELD OF THE INVENTION

The present invention relates to a communication field, and more particularly to a method and device for performing parallel interference cancellation based on control channel.

### BACKGROUND

In a wideband direct-sequence code-division multiple access system (wideband DS-CDMA system), e.g. wideband code-division multiple access system (WCDMA system), subscriber data is multiplied by pseudo-random bits obtained by a CDMA spreading code, so that bits occupied by subscriber information may be spread on a higher bandwidth for transmission.

For an uplink signal, each subscriber scrambles a subscriber signal by adopting different pseudo-random bits. Different pseudo-random bits are not fully orthogonal due to mutual correlation of the pseudo-random bits, so the different subscriber signals are interfered with each other, and the interference is called the multiple access interference. Because different phases of the different pseudo-random bits are not fully orthogonal, under the effect of different propagation path time delays of air interface transmission, self correlation of the pseudo-random bits results in the interferences among different multi-path signals of the same subscriber, and the interference is called the multi-path interference. When the number of the subscribers is larger, the interference may be modeled to a background noise increasing with the increase of the number of the subscribers. Therefore, if the number of the subscribers is larger, it is impossible to reduce a bit error rate or a frame error rate of received signals of the CDMA system by merely increasing a signal-to-noise ratio (SNR).

Reducing of the SNR required by the receiving of each subscriber means that the same bandwidth may support more subscribers to access or higher transmission rate. Particularly, as services supported by the WCDMA system become more and more complicated, the requirement is more urgent.

In the uplink of the WCDMA system, rate and power of a dedicated physical data channel (DPDCH) or an enhanced dedicated physical data channel (E-DPDCH) (certainly with enhanced dedicated physical control channel (E-DPCCH) transmission) carrying high-level data change continuously, if the high-level data is not transmitted in a transmission time interleave (TTI) period, the channel information is not transmitted. However, in order to obtain demodulation synchronization and channel fading information of other physical channels, and to maintain link synchronization, dedicated physical control channel (DPCCH) information is always transmitted after the link setup and before link disconnection of the system. The DPCCH information mainly includes pilot symbols information, transmit power control (TPC) information, and transport format combination indicator (TFCI) information of physical layer. Generally, a spreading factor adopts 256, the pilot symbols information is known for a base station, and the TPC information is transmitted by two symbols. In the system, when a ratio of subscribers with low data rates is higher, for example, when the ratio of voice subscribers or an activation ratio carrying the high-level data is lower, occupied power of the DPCCH in the whole signal received by the base station is higher.

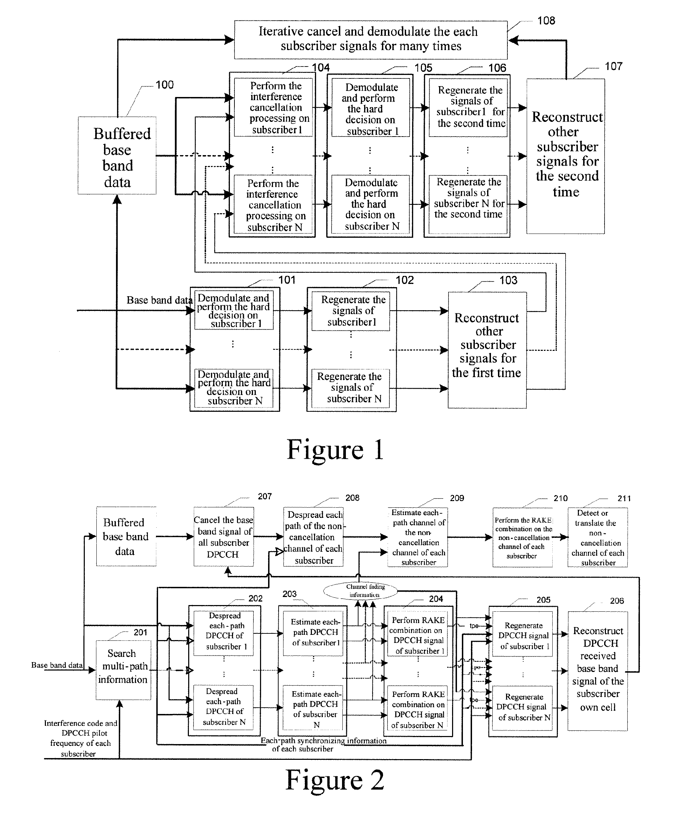

According to a prior art related to the present invention, in the uplink of WCDMA system, the base station receives all the subscriber signals, and the SNR of the received signals of each subscriber is improved by performing parallel interference cancellation on the detected multiple subscriber signals. It is assumed that the base station receives N subscriber signals, as shown in Figure 1, the method includes:

Step 101: The base station respectively demodulates received signals of each subscriber, and performs a hard decision, so as to obtain modulation symbol information sent by each subscriber.

Step 102: The received signals processed by the hard decision are regenerated.

Step 103: The received signal of each subscriber processed by regeneration is reconstructed.

During reconstruction, an interference signal of a certain subscriber is made to be a superimposed signal of other user regenerated signals, for example the interference signal to subscriber 1 is a combined signal of the regenerated signals of subscribers 2 to N, and the interference signal to subscriber N is a combined signal of the regenerated signals of subscribers 1 to N-1.

Step 104: Cancellation processing is respectively performed on the interference signal of each subscriber.

The regenerated interference signal of each subscriber is subtracted from a buffered base band data in step 100.

In order to improve the interference cancellation performance, reliable subscriber hard decision information is required, and the interference signals should be cancelled iteratively for many times. Still referring to Figure 1, the method further includes:

Step 105: The received signals of each subscriber are respectively demodulated and performed the hard decision processing again.

Step 106: The regeneration of the subscriber signals is respectively completed again.

Step 107: The reconstruction of the subscriber interference signals is completed again.

If it is necessary to improve the reliability of subscriber hard decision symbols, the interference cancellation, demodulation, hard decision, and regeneration from step 104 to step 107 should be completed, otherwise the multiple subscriber interference cancellation, demodulation, and translation are directly completed.

It can be seen that the prior art has disadvantages as follows.

1. From the whole process procedure of the signal, the iterative cancellation processing should be performed for many times (commonly at least 3 times are required) so as to obtain the reliable subscriber information, otherwise, the multiple subscriber interference cancellation performance is bad, and therefore correspondingly increases the complexity of realizing the system.

2. The spreading factor information of the DPDCH channel is carried by the TFCI domain information in the DPCCH, so at least a frame of DPCCH information needs to be received to obtain the spreading factor information. When the synchronous cancellation processing is performed on the received interference signals, more base band data should be stored to wait for the signal reconstruction output, which further increases the cost of realizing the system. At the same time, the cancellation processing performed on the received signals in each channel simultaneously results in more process time delays brought by the data demodulation, which is not allowed for the E-DPDCH demodulation requiring on-time feedback.

### SUMMARY

An embodiment of the present invention provides a method and device for performing parallel interference cancellation based on control channel. With the embodiment of the present invention, reliable subscriber information can be obtained without performing iterative cancellation for many times, realization becomes easier, and less resource is consumed. Further, the base band data storage and the waiting time delay of the service channel demodulation processing may be reduced by the method or device provided by the embodiment of the present invention.

An embodiment of the present invention is realized by the technical scheme below:

The embodiment of the present invention provides a method for performing parallel interference cancellation based on control channel, which includes:

A base station obtains demodulation decision information through despreading, combining, and deciding received signals in a DPCCH of each subscriber;

the received signals in the DPCCH of each subscriber are reconstructed, according to received pilot symbols information in the DPCCH of each subscriber and the obtained demodulation decision information, and a parallel interference cancellation processing is performed on received subscriber base band data based on the reconstructed signals.

The demodulation decision information includes transmit power control (TPC) information, and/or transport format combination indicator (TFCI) information.

The obtaining the demodulation decision information further includes:

Descramble and despread each-path signals in the DPCCH of each subscriber;

each subscriber obtains respectively radio channel fading information of the descrambled and despread each-path signals by an estimation of a radio channel, and performs fading correction processing on the descrambled and despread each-path signals according to the radio channel fading information;

each-path signals processed by the fading correction are combined, and TPC symbol information of each time slot processed by the combining is decided so as to obtain the demodulation decision information.

The interference cancellation processing further includes :

The received signals in the DPCCH of each subscriber are regenerated according to the obtained demodulation decision information, the pilot symbols information of each subscriber, phases of the each-path signals in the searched multi-path information, and the obtained channel fading information;

coherent accumulation processing is performed on the regenerated received signals in the DPCCH of each subscriber according to absolute phases, and then the received signals in the DPCCH of each subscriber are reconstructed; and

the interference cancellation processing is performed on the base band signal in the DPCCH of each subscriber according to the reconstructed received signals.

The performing the interference cancellation processing on the base band signal in the DPCCH of each subscriber according to the reconstructed received signals further includes:

The reconstructed received signal of the DPCCH of each subscriber is subtracted from buffered base band data so as to obtain base band data processed by the interference cancellation.

The method further includes performing respectively the corresponding demodulation processing on signals in a non-cancellation channel of each subscriber based on the base band data processed by the interference cancellation.

The performing respectively the corresponding demodulation processing on the signals in a non-cancellation channel of each subscriber based on the base band data processed by the interference cancellation further includes:

Each-path signals in the non-cancellation channel of each subscriber are despread;

radio channel fading information is obtained, and each subscriber performs the fading correction processing on the despread signals in the non-cancellation channel according to the radio channel fading information; or

each subscriber obtains respectively and independently the radio channel fading information of the despread each-path signals by each symbol fading smoothness of the radio channel, and performs the fading correction processing on the despread signals according to the radio channel fading information;

the each-path signals processed by the fading correction are combined; and

the combined each-path signals are detected or decoded.

Another embodiment of the present invention provides a device for performing parallel interference cancellation based on control channel, which includes a demodulation decision information obtaining unit, a signal reconstructing unit, and a parallel interference cancellation unit.

The demodulation decision information obtaining unit is adapted to despread, combine, and decide received signals in a dedicated physical control channel (DPCCH) of each subscriber so as to obtain demodulation decision information.

The signal reconstructing unit is adapted to reconstruct the received signals in the DPCCH of each subscriber, according to received pilot symbols information in a DPCCH of each subscriber and the obtained demodulation decision information.

The parallel interference cancellation unit is adapted to perform a parallel interference cancellation processing on received subscriber base band data based on the reconstructed signals.

The demodulation decision information obtaining unit further includes an each-path descrambling and despreading unit, an each-path DPCCH estimating unit, and an each-path signal combining and deciding unit.

The each-path descrambling and despreading unit is adapted to descramble and despread each-path signals in the DPCCH of each subscriber.

The each-path DPCCH estimating unit is adapted to estimate a radio channel of each subscriber, obtain radio channel fading information of the descrambled and despread each-path signals, and perform a fading correction processing on the descrambled and despread each-path signals according to the radio channel fading information.

The each-path signal combining and deciding unit is adapted to combine the each-path signals processed by the fading correction of each subscriber, and decide TPC symbol information of each time slot processed by the combining so as to obtain demodulation decision information.

The demodulation decision information obtaining unit further includes a coherent accumulation processing unit adapted to perform a coherent accumulation processing on TPC symbol information bits processed by the combining by the each-path signal combining and deciding unit.

The device further includes a regenerating unit, which is adapted to regenerate received DPCCH signals from the received signals in the DPCCH of each subscriber by the obtained demodulation decision information, the pilot symbols information of each subscriber, phases of the each-path signals in the obtained multi-path information, and the obtained channel fading information.

It can be seen from the technical scheme provided by the present invention that in the embodiment of the present invention, based on the known pilot symbols information in each subscriber and reliable TPC, the received signals in the DPCCH of each subscriber are decided, then based on the decision result, the interference cancellation processing is performed on the subscriber base band data, the procedure only requires one demodulation process. Therefore, realization becomes easier, and less resource is consumed compared with the multiple iteration method in the prior schema. The embodiment of the present invention reconstructs the received signals in the subscriber DPCCH based on the known pilot symbols and the TPC signal of the time slot level so as to reduce the base band data storage and the waiting time delay of the service channel demodulation processing. Further, in the embodiment of the present invention, part of the interference of the subscriber DPCCH is cancelled, an SNR of the service channel is improved, so the capacity and the coverage performance of the whole self-interference system are improved. Particularly, when the ratio of the DPCCH power in the whole subscriber power is higher, for example the voice subscriber or the service activation has a low ratio, but the DPCCH needs to be transmitted continuously.

In addition, in the embodiment of the present invention, when the cancellation processing is performed on the subscriber signal interference, the reconstructed signals in the DPCCH of all subscribers are subtracted, the signals in the non-cancellation channel are demodulated based on the output signals processed by the cancellation, instead of individually reconstructing the interference signals of each subscriber and respectively performing the cancellation, so that the consumed resource and the control flow are further reduced. When the stored resource is reduced, the demodulation of the channels having higher requirements on time delay is processed by the signals processed by the interference ***cancellation*** so as to improve the demodulation performance of the channels.

### BRIEF DESCRIPTION OF THE DRAWING(S)

Figure 1 is a block diagram of performing parallel interference cancellation processing on the detected multiple subscriber signals in the prior art;

Figure 2 is a block diagram of processes of an embodiment of the present invention; and

Figure 3 is a schematic structural view of an embodiment of the device of the present invention.

### DETAILED DESCRIPTION

The present invention provides a method and device for performing parallel interference cancellation based on control channel. In the present invention, received signals in a DPCCH of each subscriber are despread, combined and decided by a base station so as to obtain demodulation decision information. The received signals in the DPCCH of each subscriber are reconstructed according to received pilot symbols information in a DPCCH of each subscriber and the obtained demodulation decision information, and a parallel interference cancellation processing is performed on received subscriber base band data based on the reconstructed signals.

In the present invention, based on the known pilot symbols symbol information sent by the subscriber in the DPCCH, the method and the device for the interference cancellation processing are simplified so as to improve the demodulation performance of the service channel, and to increase the system capacity and the coverage.

In the WCDMA system, the uplink DPCCH mainly transmits the pilot symbols, the TPC, and the TFCI information, in which the pilot symbols information is known for the base station receiving. For an embodiment provided by the present invention, the interference cancellation processing is performed on the subscriber received signal by using the pilot symbols information and the reliably decided TPC information in the DPCCH received by each subscriber. The whole technique block diagram is as shown in Figure 2, which includes the following steps.

Step 201: The multi-path information in the DPCCH of each subscriber is searched.

Step 202: Each-path signals in the DPCCH of each subscriber are descrambled and despread based on the searched multi-path information.

The two blocks in step202 respectively represent that the each-path signals of subscriber 1 and the DPCCH of subscriber N are descrambled and despread, and dashed lines represent that the similar process is performed on the other subscribers.

Step 203: Each subscriber respectively obtains the radio channel fading information of the descrambled and despread each-path signals by estimating of the radio channel, and performs the fading correction processing on the descrambled and despread signals according to the radio channel fading information.

Step 204: Each-path signals processed by the fading correction of each subscriber are respectively combined, and the TPC symbol information of each time slot processed by the combining is decided so as to obtain demodulation decision information.

If the DPCCH has a lower SNR, at this time, it is not necessary to select the TFCI information, and the demodulation decision information merely includes the TPC information. If the DPCCH has a higher SNR, at this time, the demodulation decision information includes not only the TPC information, but also the TFCI information.

In order to obtain more reliable demodulation decision information, it is necessary to perform a coherent accumulation processing on a plurality of TPC information bits transmitted in each time slot before deciding the TPC symbol information of each time slot. In other words, the process of step 204 is:

Each-path signals of the same activation set in each DPCCH are combined, the coherent accumulation is performed on two TPC symbols information, and then the TPC symbol information of each time slot is decided so as to obtain the demodulation decision information.

The combining processing may include a RAKE combining processing or a softer combing processing on receiving the same subscriber signal through multicell. In other words, the process from step 202 to step 204 supports the softer combing processing on receiving the same subscriber signal through multicell, i.e. the demodulation signals may be combined.

The above deciding processing may include a hard decision processing, i.e. the hard decision processing after the two TPC symbols are combined.

Step 205: The received signals in the DPCCH of each subscriber are regenerated by the obtained demodulation decision information, the pilot symbols information of each subscriber, the phases of each-path signals in the searched multi-path information, and the obtained channel fading information. In other words, the received DPCCH signals are regenerated (the original received signals include the DPCCH of each subscriber of the cell, other physical channels of each subscriber of the cell, signals of neighbor cell subscribers, and system background noise).

The base band received signals of the DPCCH of each subscriber are regenerated by using the time delay phases of each-path signals in the searched multi-path information in step 201 and the channel fading information obtained in step 203, according to the known pilot symbols information of each subscriber and the obtained demodulation decision information.

If the TFCI information is not selected, 0 is filled in the reconstructed signals at the corresponding positions.

If the TPC information may be obtained at each time slot, the DPCCH of each subscriber signals are regenerated with time slot as a period, which includes the channel fading smoothness time and the hardware processing time in the TPC demodulation. Time delay that the base band data waits for the DPCCH signal reconstruction is at most several time slots. Therefore the time delay caused by the base band data buffer is also several time slots, and the waiting time delay of the channel demodulation processing based on the cancellation signal is also several time slots.

Step 206: The coherent accumulation processing is performed on the regenerated received signals in the DPCCH of each subscriber according to the absolute time delay phase so that the received signals of the DPCCH of each subscriber is reconstructed.

Step 207: The interference cancellation processing is performed on the base band signals in the DPCCH of each subscriber according to the reconstructed received signals so as to obtain the base band data processed by the interference cancellation. The detailed processing procedure is as following:

The reconstructed received signals of the DPCCH of each subscriber are subtracted from the buffered base band data so as to obtain the base band data processed by the interference cancellation process.

After the reconstructed DPCCHs signals of all subscriber are subtracted from the buffered base band received data, the messages in other non-cancellation channels, e.g. DPDCH channel, E-DPCCH, E-DPDCH channel, and physical random access channel (PRACH), of each subscriber are respectively demodulated and decoded based on the base band data processed by the cancellation The detailed implementing procedure includes:

Step 208: Each-path signals in a non-cancellation channel of each subscriber are despread.

Step 209: The radio channel fading information is obtained, and the fading correction processing is performed on the despread signals in the non-cancellation channel according to the obtained radio channel fading information.

Step 209: The corresponding processing may be performed on the received signals in each subscriber non-cancellation channel by adopting the output channel fading information in step 203 or adopting the independent smoothness method. The detailed processing procedure includes:

Each subscriber performs the fading correction processing on the despread signals in the non-cancellation channel according to the radio channel fading information output in step 203; or

each subscriber respectively and independently obtains the radio channel fading information of the despread each-path signals by each symbol fading smoothness of the radio channel, and performs the fading correction processing on the despread signals in the non-cancellation channel according to the radio channel fading information.

Step 210: Each-path signals processed by the fading correction in the non-cancellation channel are combined.

The combining processing may include the RAKE combining processing or the softer combining processing of receiving the same subscriber signal by the multicell.

In step 205 and step 206, the corresponding processing is respectively performed on the received signals of each subscriber of each multicell, and in step 207, the cancellation processing is performed on the subscriber signals of each multicell. Therefore, from step 208 to step 210, when the signals in the non-cancellation channel are processed, it is possible to perform the softer combination on the received signals of mutlicell subscriber.

Step 211: The combined each-path signals are detected or decoded.

In this embodiment provided by the present invention, the interference cancellation process procedure is performed on each subscriber. The present invention also supports performing the interference cancellation processing on each subscriber each-path signal. In other words, when interference signals of each subscriber are reconstructed, the regenerated signals in the DPCCH of the subscriber itself are excluded, and then each-path signal in the DPCCH of each subscriber is respectively demodulated. Therefore, the reliable TFCI translation result is obtained, and the realization cost and the processing time delay of the schema are higher.

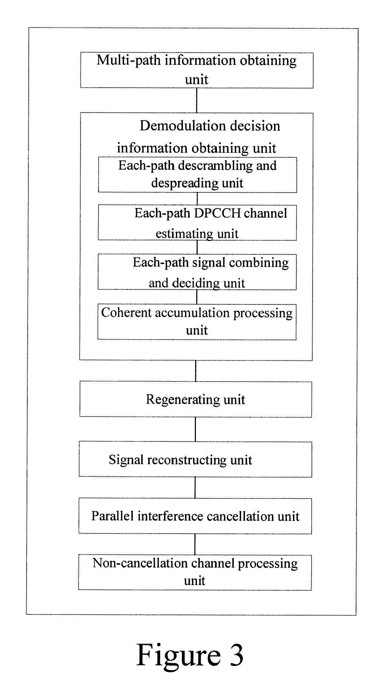

Another embodiment of the present invention provides a device for performing parallel interference cancellation based on control channel, and a schematic structural view of the embodiment is as shown in Figure 3, which includes a demodulation decision information obtaining unit, a signal reconstructing unit, and a parallel interference cancellation unit.

The demodulation decision information obtaining unit is adapted to despread, combine, and decide the received signals in the DPCCH of each subscriber so as to obtain the demodulation decision information. The function of the unit may be realized in detail by the following units of an each-path descrambling and despreading unit, an each-path DPCCH estimation unit, and an each-path signal combining and deciding unit.

The each-path descrambling and despreading unit is adapted to descramble and despread each-path signals in the DPCCH of each subscriber.

The each-path DPCCH estimation unit is adapted to estimate the radio channel of each subscriber, obtain the radio channel fading information of the descrambled and despread each-path signals, and perform the fading correction processing on the descrambled and despread signals according to the radio channel fading information.

The each-path signal combining and deciding unit is adapted to combine each-path signals processed by the fading correction by each subscriber, and decide the TPC symbol information of each time slot processed by the combining so as to obtain demodulation decision information.

The demodulation decision information obtaining unit further includes a coherent accumulation processing unit, which is adapted to perform the coherent accumulation processing on the TPC symbol information bits processed by the combined by each-path signal combining and deciding unit.

The signal reconstructing unit is adapted to reconstruct the received signals in the DPCCH of each subscriber, according to the received pilot symbols information in the DPCCH of each subscriber and the obtained demodulation decision information.

The parallel interference cancellation unit is adapted to perform the parallel interference cancellation processing on the received subscriber base band data based on the reconstructed signals.

The device further includes a multi-path information obtaining unit, a regenerating unit, and a non-cancellation channel processing unit.

The multi-path information obtaining unit is adapted to obtain the multi-path information in the DPCCH of each subscriber so as to serve as the basis of the despread processing of the demodulation decision information obtaining unit.

The regenerating unit is adapted to regenerate received DPCCH signals from the received signals in the DPCCH of each subscriber by the obtained demodulation decision information, the pilot symbols information of each subscriber, the phases of each-path signals in the obtained multi-path information, and the obtained channel fading information.

The non-cancellation channel processing unit is adapted to process the non-cancellation channel.

It can be seen from the detailed implementing scheme of the present invention that the embodiment of the present invention has the following advantages.

1. In the embodiment of the present invention, part of the interference of the subscriber DPCCH is cancelled, the receive SNR of the service channel is improved, so the capacity and the coverage performance of the whole self interference system are improved, particularly when the ratio of the DPCCH power in the whole subscriber power is higher, for example, the voice subscriber or the service activation has a low ratio, but the DPCCH needs to be transmitted continuously.

2. In the embodiment of the present invention, based on the known pilot symbols information of each subscriber and the reliable TPC decision, the interference cancellation is performed on the DPCCH signals in the received signals, the embodiment of the present invention requires demodulation processing only once, and therefore having easier realization and consuming less resource compared with the multiple iterations in pure MUD technique.

3. In the cancellation method given by the embodiment of the present invention, the reconstructed signals of all subscriber DPCCH are subtracted, the non-cancellation channel is demodulated by adopting the unified cancellation signals output in step 207, instead of individually reconstructing the interference of each subscriber and respectively canceling, so that the resource consumed by realization and the control flow are further reduced

4. The embodiment of the present invention reconstructs the signals based on the time slot level so as to reduce the base band data storage and the waiting time delay of the service channel demodulation processing. While the storage resource is reduced, the demodulation of the channel with higher requirement on the time delay may be processed by the signals processed by the inference cancellation, so that the demodulation performance of the channels is improved.

It will be apparent to those skilled in the art that various modifications and variations can be made to the structure of the present invention without departing from the scope or spirit of the invention. In view of the foregoing, it is intended that the present invention covers modifications and variations of this invention provided they fall within the scope of the following claims and their equivalents.

## Claims

1. A method for performing parallel interference cancellation based on control channel, comprising:
obtaining , by a base station, demodulation decision information through despreading, combining, and deciding received signals in a dedicated physical control channel (DPCCH) of each subscriber;
reconstructing the received signals in the DPCCH of each subscriber according to received pilot symbols information in the DPCCH of each subscriber and the obtained demodulation decision information, and
performing, based on the reconstructed signals, parallel interference cancellation processing on received subscriber base band data.

2. The method according to claim 1, wherein the demodulation decision information comprises:
transmit power control (TPC) information, and/or
transport format combination indicator (TFCI) information.

3. The method according to claim 1, wherein the obtaining the demodulation decision information further comprises:
descrambling and despreading each-path signals in the DPCCH of each subscriber;
obtaining respectively, by each subscriber, radio channel fading information of the descrambled and despread each-path signals by an estimation of a radio channel, and performing fading correction processing on the descrambled and despread each-path signals according to the radio channel fading information; and
combining the each-path signals processed by the fading correction, and deciding TPC symbol information of each time slot processed by the combining so as to obtain the demodulation decision information.

4. The method according to claim 3, wherein the deciding comprises:
hard decision processing.

5. The method according to claim 3, before the descrambling and despreading each-path signals, comprising:
searching multi-path information in the DPCCH of each subscriber.

6. The method according to claim 1, wherein the interference cancellation processing further comprises:
regenerating the received signals in the DPCCH of each subscriber according to the obtained demodulation decision information, the pilot symbols information of each subscriber, phases of the each-path signals in the searched multi-path information, and the obtained channel fading information;
performing a coherent accumulation processing on the regenerated received signals in the DPCCH of each subscriber according to absolute phases, and reconstructing the received signals in the DPCCH of each subscriber; and
performing the interference cancellation processing on the base band signal in the DPCCH of each subscriber according to the reconstructed received signals.

7. The method according to claim 6, wherein the performing the interference cancellation processing on the base band signal in the DPCCH of each subscriber according to the reconstructed received signals further comprises:
subtracting the reconstructed received signal of the DPCCH of each subscriber from buffered base band data so as to obtain base band data processed by the interference cancellation.

8. The method according to claim 1, further comprising:
performing respectively corresponding demodulation processing on signals in a non-cancellation channel of each subscriber based on the base band data processed by the interference cancellation.

9. The method according to claim 8, wherein the performing respectively the corresponding demodulation processing on the signals in a non-cancellation channel of each subscriber based on the base band data processed by the interference cancellation further comprises:
despreading the each-path signals in the non-cancellation channel of each subscriber;
obtaining radio channel fading information, and performing, by each subscriber, a fading correction processing on the despread signals in the non-cancellation channel according to the radio channel fading information; or
obtaining respectively and independently, by each subscriber, the radio channel fading information of the despread each-path signals by each symbol fading smoothness of the radio channel, and performing the fading correction processing on the despread signals according to the radio channel fading information;
combining the each-path signals processed by the fading correction; and
detecting or decoding the combined each-path signals.

10. The method according to any one of claims 1 to 9, wherein the combining processing comprises:
RAKE combining processing; or
softer combining processing on receiving the same subscriber signal by multicell.

11. A device for performing parallel interference cancellation based on control channel, comprising:
a demodulation decision information obtaining unit, adapted to despread, combine, and decide received signals in a dedicated physical control channel (DPCCH) of each subscriber so as to obtain demodulation decision information;
a signal reconstructing unit, adapted to reconstruct the received signals in the DPCCH of each subscriber according to received pilot symbols information in a DPCCH of each subscriber and the obtained demodulation decision information; and
a parallel interference cancellation unit, adapted to perform a parallel interference cancellation processing on received subscriber base band data based on the reconstructed signals.

12. The device according to claim 11, wherein the demodulation decision information obtaining unit further comprises:
an each-path descrambling and despreading unit, adapted to descramble and despread each-path signals in the DPCCH of each subscriber;
an each-path DPCCH estimating unit, adapted to estimate a radio channel of each subscriber, obtain radio channel fading information of the descrambled and despread each-path signals, and perform fading correction processing on the descrambled and despread each-path signals according to the radio channel fading information; and
an each-path signal combining and deciding unit, adapted to combine the each-path signals processed by the fading correction by each subscriber, and decide TPC symbol information of each time slot processed by the combining so as to obtain demodulation decision information.

13. The device according to claim 12, wherein the demodulation decision information obtaining unit further comprises:
a coherent accumulation processing unit, adapted to perform a coherent accumulation processing on TPC symbol information bits processed by the combining by the each-path signal combining and deciding unit.

14. The device according to claim 12, further comprising:
a regenerating unit, adapted to regenerate received DPCCH signals for the received signals in the DPCCH of each subscriber by the obtained demodulation decision information, the pilot symbols information of each subscriber, phases of the each-path signals in the obtained multi-path information, and the obtained channel fading information.

15. The device according to claim 11, further comprising:
a multi-path information obtaining unit, adapted to obtain the multi-path information in the DPCCH of each subscriber, so as to serve as a basis of the despreading processing of the demodulation decision information obtaining unit.

16. The device according to claim 11, further comprising:
a non-cancellation channel processing unit, adapted to process the non-cancellation channel.
